# EUROPEAN PATENT SPECIFICATION

(11) **EP 1 602 601 B1**
(45) Date of publication and mention of the grant of the patent: **29.10.2008**
(21) Application number: 04717806.6
(22) Date of filing: 05.03.2004
(51) Int. Cl.: B65G 17/26, B65G 37/00

(54) **CONTAINER CARRYING CONVEYOR APPARATUS**
FÖRDEREINRICHTUNG ZUR BEFÖRDERUNG VON BEHÄLTERN
DISPOSITIF DE TRANSPORT DE CONTENANTS

(30) Priority: 05.03.2003 JP 2003059235
(43) Date of publication of application: 07.12.2005
(73) Proprietor: Shikoku Kakoki Co., Ltd., Itano-gun, Tokushima-ken 771-0202 (JP)
(72) Inventor: ABE, Kazuo, c/o Shikoku Kakoki Co., Ltd., Itano-gun, Tokushima 7710202 (JP)
(74) Representative: van Westenbrugge, Andries
(86) International application number: PCT/JP2004/002818
(87) International publication number: WO 2004/078620

(56) References cited:
- JP-A- 5 338 758
- JP-A- 10 181 717
- JP-A- 10 181 718
- JP-A- 49 087 484
- JP-A- 2000 053 224
- JP-A- 2000 072 216

## Description

### Technical Field

The present invention relates to a container-carrying-conveyor apparatus and, more specifically, to a conveyor apparatus for carrying square-cylindrical containers which are rhomboid or parallelogram in cross-section, and a method for carrying the square-cylindrical containers using the container-carrying-conveyor apparatus.

### Background Art

Conventionally, the high-speed liquid-filling machine provided with a filling station, illustrated in Fig. 8 for example, is known as a high-speed liquid-filling machine for filling liquid such as milk and juice to paper containers. Such high-speed liquid-filling machine comprises: a machine frame 1 including the filling station; a carrying conveyor 2 capable of carrying containers in such a manner that they sequentially stop at the filling station; a rotative body 4 including a radial mandrel 3, disposed upward of the starting end of the transport passage of the carrying conveyor 2; a filling device 8 including a filling tank 5, a quantifying cylinder 6, and a filling nozzle 7, and a container-lifting-and-lowering device 9, disposed at the filling station located in the midpoint of the transport passage; a heat sealer 10 disposed on the latter half of the transport passage, and so on.

Filling and packing by the above high-speed liquid-filling machine is effected by the steps of: first, unfolding a container material (carton blank) into a square-cylindrical shape while taking it out from a magazine 11 storing the container material which is capable of being formed into the square-cylindrical shape; inserting the unfolded material sequentially to the mandrel 3; heating the material on the edge that will form the bottom of the container by a bottom-heating device 12; folding flat the heated circumferential edge of the container by a container-edge folding device 13; pressing the above flat-folded edge by a container-bottom-application device 14 to form a square-cylindrical container with a bottom; and shifting the square-cylindrical container with a bottom from the mandrel to container holders attached to endless chains 15. The above carrying conveyor 2 is comprised of: the endless chains 15 coupled with the plurality of container holders; and a pair of sprockets 16 and 17 mounted at the starting end and the terminal end of the transport passage respectively, where the endless chains 15 are bridged.

The square-cylindrical containers with a bottom shifted onto the carrying conveyor are carried intermittently by means of the container holders attached to the endless chains 15, over a rail 18 which provides the bottom support for and guides the containers. The square-cylindrical containers are then conveyed through a preparative folding device 19 which marks fold lines on the square-cylindrical containers with a bottom such that the top of the containers may be effectively interfolded into a roof shape, and through a sterilizer 20 which sterilizes the interior of the container by oxygenated-water injection and/or ultraviolet irradiation, and finally to the filling station. The square-cylindrical containers with a bottom that are intermittently carried and stopped at the filling station are then pushed up by the container-lifting-and-lowering device 9. When the container reaches the top dead center, the filling nozzle 7 starts filling liquid to the descending container until the head of the filling nozzle 7 is withdrawn from the descended container, and the container carrying is started almost the same time as the filling is completed. The square-cylindrical containers with a bottom filled with liquid are then carried through a main-folding device 21 which finally interfolds the container top along the pre-folded lines into the roof-shape, and through a container-top heating device 22 which applies heat to the sealing surface of the interfolded container top. The container top is then heat-sealed with pressure bonding by a heat sealer 10 and is printed with a date and the like by a printer 23, and thereafter the containers are dischargedas liquid-filled, packed products.

As stated above and shown in Fig. 9 for example, a carrying conveyor which carries square-cylindrical containers with a bottom is known, such conveyor comprising: a pair of single-stage or multi-stage endless chains 15 facing parallel to each other and running in rotation on the same level; a pair of sprockets 16 and 17 which the endless chains 15 are disposed about; a drive shaft 25 and a driven shaft 26 holding the sprockets 16 and 17; a plurality of container holders 24 attached at even intervals to the above endless chains 15; and the container-transport passage along which the endless chains 15 sequentially travel through a group of devices including the filling device and the sealing device. Conventionally, for this type of container-carrying conveyor, respective common endless chains have been used on the right and left. Further, in such container-carrying conveyor, a single motor has operated the right and left endless chains to drive them intermittently by repeating go-and-stop operations, when such right and left endless chains were driven synchronously.

It is necessary for a container-carrying conveyor to stop container holders holding the containers, precisely at given operational positions of the filling device and the sealing device and the like. Particularly for ensuring precise operations of a group of various devices along the conveyor for carrying square-cylindrical containers, which is capable of dealing with different sizes of square-cylindrical containers, it is important to adjust the container holders to the size conforming to the angular shape and outer dimensions of the container without displacing the center position of the container holders. There is a known method for adjusting the holding size of the container holders, wherein first the drive shafts and the driven shafts holding endless chains are moved horizontally in transverse to the transport direction of the conveyors in order to adjust the facing distance between the conveyors, then the front and rear holding pieces that hold the angular corners of the square-cylindrical containers are adjusted for the space in-between, whereby the holding size of the container holder is adjusted. As a container-carrying conveyor capable of adjusting container holders to the size conforming to the angular shape and outer dimensions of the containers, a container-carrying conveyor provided with over-and-under, four-stage endless chains is known, wherein a pair of endless-chain conveyors are arranged to face parallel to each other on the same level; the holding pieces of the container holders hold the square-cylindrical container by the four angular corners, being attached at regular intervals to the respective endless chains traveling rectilinearly; the front holding pieces that hold the front angular corners and the rear holding pieces that hold the rear angular corners are attached to the respective different double-stage endless chains; the endless chains are moved away from each other by the same single phase in counter direction; whereby the space between the front and rear holding pieces of the container holders is adjusted (see Japanese Laid-Open Patent Application No.2000-72216 and Japanese Laid-Open Patent Application No.2000-53224).

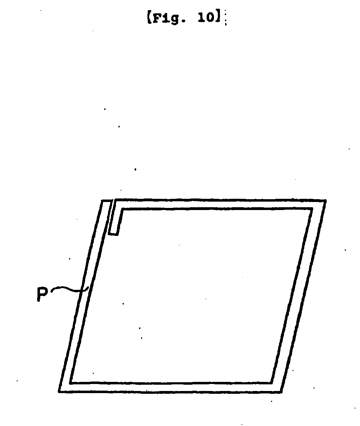

The square-cylindrical container P with a bottom, which is carried on the container-carrying conveyor, is a carton with a bottom made of carton blank being unfolded into a square-cylindrical shape and sealed at the bottom. It is known that a carton with a bottom unfolded into a square-cylindrical shape exhibits a rhomboidal or parallelogram cross-section under natural conditions as shown in Fig. 10, due to force trying to restore the original state of the folded carton blank (buckling; diamond transformation), and also, that the degree of buckling is generally proportional to the stiffness of paper.

Further, there is a known container-bottom-shaping device capable of shaping and sealing the bottom of the paper-cylindrical containers with the rectangular cross section without using a multi-mandrel turret, that is, the container-bottom-shaping device capable of supplying the conveyor with square-cylindrical containers with both ends open, and effecting container-bottom sealing while they are on the conveyor (see Japanese Patent Publication No.2865317).

In recent years, research and development effort has been actively made for enhancing the performance (speeding up of operations) of this type of high-speed liquid-filling machine. For example, the present applicant has developed a high-speed liquid-filling machine comprising: a machine frame including a first filling station and a second filling station; a conveyor which conveys containers in such a manner that they sequentially stop at the first filling station and the second filling station; a first filling device and a second filling device positioned at the first filling station and the second filling station respectively; a supplying means for supplying the same filling liquid to the first filling device and the second filling device respectively; and a controlling means which sets the amount filled by the first filling device as much as 50% to 80% of the content of the container, and by the second filling device as much as 50% to 20% of the content of the container respectively. Such high-speed liquid-filling machine allows high-speed operation of devices without causing the problem of bubbling and disturbed surface of liquid in the container (Japanese Laid-Open Patent Application No.H10-194390).

Further, chain conveyors are commonly known to generate elongation of chains due to wear of endless chains over a long period of use. For example, in roller endless chains, constituted by sequential combinations of pin links and roller links, where each pin link has pin link plates at both ends of the two pins, and each roller link has roller link plates at both ends of the two bushings on which the rollers are fitted rotatably, it is known that the pin and the bushing which respectively constitute slide portions are brought into contact with each other in use and hence, the pin and the bushing are worn thus decreasing the thickness of the pin and the bushing whereby the elongation of the endless chain is generated.

Meanwhile, as a technique for tensioning the chains preferably, a take-up of a chain conveyor is known, such take-up comprising: a holding arm which is freely pivotable within a given area where the driven sprocket which is disposed with chains is mounted at the head position and is so located that it may be moved closer to or further away from the drive sproket; a biasing means biasing the holding arm into the direction to which the driven sprocket may be moved further away from the drive sprocket; and a locking means which lock-releasably locks the pivot of the holding arm at any given positions within the pivot area (see Japanese Laid-Open Patent Application No.H5-338758). This technique, however, has only enabled correction to the extent that the level of elongation is the same on the right and left.

Further, as a continuous unloader capable of tensioning endless chains equally on the right and left regardless the chain-length difference between the right and left, there is a known continuous unloader comprising a chain-bucket conveyor, whose right and left endless chains are roratably and endlessly disposed about between the perpendicularly installed elevator part and the digging part which is extending horizontally from the lower end thereof, wherein plural drive elements are provided at regular intervals at given positions in the rotation direction of the above chains, and in addition, the right and left chains are driven integrally under the common axis shared by the right and left in terms of the drive element which is bearing the maximum load while such right and left chains are driven separately under separate axes for the right and left in terms of other drive elements which permit independent operations of the right and left chains (Japanese Laid-Open Patent Application No.9-30651). This technique, however, is the technique for allowing equal tensioning of chains that have resulted in different lengths on the right and left, and not the technique for preventing the chains on the right and left from generating elongation difference.

Conventionally, in high-speed liquid-filling machines, right and left endless chains have been recognized to elongate, but both chains have been believed to elongate at about the same rate. Generation of endless-chain elongation displaces the center position of the container holders in the transport direction thus give rise to various drawbacks such as the seizure of endless chain into a sprocket wheel or a conveyor rail at the time of transportation and the leaking of liquid from the container after filling besides the displacement of centering between the device such as the filling device operable in a group of respective devices and the container. Particularly, with respect to the displacement of centering, this displacement is absorbed by moving the filling device or the like in the transport direction. However, there exists a limit with respect to the absorption of the displacement and hence, when the absorption of the displacement reaches the limit, it is determined that the lifetime of the endless chain has almost run down and the right and left endless chains are exchanged at the same time.

Nevertheless, cases have recently occurred where some endless chains have to be replaced prematurely before their lifetime expires. Such cases are seen to concentrate on high-speed liquid-filling machine of the latest type and the investigation has revealed that they are resulting from the elongation difference between the right and left endless chains. However, elongation difference between the right and left endless chains cannot be adjusted completely. The high-speed liquid-filling machine of the latest type is made with a view to attaining even higher performance (speeding up of the operation) without changing the number of rows and feeding pitches and hence, a time cycle of the intermittent operations of the conveyor is shortened. In order to perform pre-determined filling, sealing, and sterilizing within this short time cycle, particularly within a short intermittent stop time, sections for filling, sealing and sterilizing are provided in plural numbers (see Japanese Laid-Open Patent Application No.2000-72216). The provision of a plural number of sections for filling, sealing and sterilizing inevitably leads to an extended machine length. It is the object of the present invention to provide a conveyor for carrying square-cylindrical containers with a bottom, where the extended lifetime of endless chains is materialized, by equalizing loads on endless chains, in carrying conveyors, such as the endless chains in the carrying conveyors of the high-speed liquid-filling machine of the latest type with an extended machine length where some endless chains develop elongation relatively faster than other endless chains.

In the containers conveyed with a high-speed liquid-filling machine of this type, the buckling (diamond transformation) is generated. This buckling contributes to generate the load difference between the right and left endless chains in a chain conveyor. The latest-type, high-speed liquid-filling machine has an even extended machine length which have lead to increased loads exerted on the right and left endless chains, particularly on the endless chain on the side which holds the acute angle of the container and applies force to push the container forward and thus, the elongation difference between the right and left endless chains has grown more significant than it had been expected. Additionally, the present inventors have also found out that operating a filling machine at a high speed (high-speed operation of a chain conveyor) involves increased loads on respective endless chains, particularly on the endless chain on the side which holds the acute angle of the container and applies force to push the container forward and thus, the elongation difference between the right and left endless chains grows more significant than is expected and hence, one-side endless-chain elongation occurs.

As specifically shown in Fig. 9, the container holder 24 mounted on the conveyor for carrying the square-cylindrical containers with a bottom, is comprised of four holing pieces of 24a, 24b, 24c, and 24d, and the cross section of the square-cylindrical container with a bottom is not of its supposed initial shape, i.e. quadrate or rectangle. When the square-cylindrical container P is quadrate or rectangle in cross section and is conveyed in the direction of the arrow X, endless chain 15R and endless chain 15L attached with holding pieces 24b and 24d respectively, bear the same level of loads because holding pieces 24b and 24d are positioned at the rear of the square-cylindrical container with a bottom, to hold and push forward the square-cylindrical container with a bottom. However, when the square-cylindrical container P with a bottom is deformed and is rhomboid or parallelogram in cross section, then holding piece 24d, which deals with the rear-obtuse angle of the square-cylindrical container P with a bottom, does not contribute to the forward-pushing of the square-cylindrical container P with a bottom thus only holding piece 24b which deals with the rear-acute angle is involved in the forward-pushing of the square-cylindrical container P with a bottom. Therefore, compared to endless chain 15L, a larger load is exerted on endless chain 15R which is attached with holding piece 24b hence resulting in the generation of elongation due to wear of the pins and the like of the endless chains. Additionally, similar to the case with four holding pieces, when the square-cylindrical container P with a bottom, whose container holder 24 is deformed into rhomboid or parallelogram in cross section, is held by the two holding pieces 24b and 24c by the two acute-angle corners, a larger load is exerted on endless chain 15R attached with holding piece 24b, compared to endless chain 15L, hence resulting in generation of greater elongation.

Further, one-side endless-chain elongation is also induced by the force of the endless chain trying to correct the buckling of the square-cylindrical container P with a bottom (the buckling correction force). That is, when the square-cylindrical container P with a bottom is carried in the direction of the arrow X, the magnitude of the load exerted on the endless chain 15R, which is holding the square-cylindrical container by the rear acute-angle corner in terms of the traveling direction, corresponds to the sum of the tension of the endless chain and the buckling correction force (acting in the transport direction). Meanwhile, when the container is conveyed in the direction of the arrow X, the magnitude of the load exerted on the endless chain 15L corresponds to the difference between the tension of the endless chain and the buckling correction force (acting inversely to the transport direction). Consequently, the load on endless chain 15R becomes relatively larger than that on endless chain 15L and therefore, one-side endless-chain elongation is generated. This inclination becomes more significant as the buckling force of the square-cylindrical container P with a bottom increases.

The present inventors have intended to equalize the elongation of endless chains in carrying conveyors where some endless chains elongate relatively faster than other endless chains, as is the case with endless chains in carrying conveyors of the latest-type, high-speed liquid filling machines and the like of extended machine length. For this purpose, the container holder is caused to convey the square-cylindrical container with a bottom in a state that it is holding the square-cylindrical containers with a bottom, deformed into rhomboid or parallelogram in cross section, by both the rear angular corners in terms of traveling direction. In addition, a detecting mechanism is provided for detecting the load difference between the pair of endless chains, and the number of revolutions of the driving motor is controlled in order to suppress the load difference between the pair of endless chains within a given pre-determined value when such detecting mechanism detects a value exceeding the given pre-determined value. Thus, the present inventors have confirmed that the lifetime of endless chains can be extended, whereby the present invention has been completed.

### Disclosure of the Invention

The present invention relates to a container-carrying-conveyor apparatus comprising: a pair of single-stage or multi-stage endless chains facing parallel to each other and running in rotation on the same level; sprockets which the endless chains are disposed about; a drive shaft and a driven shaft or two drive shafts holding the sprockets; a container holder attached to the above endless chains, including holding pieces capable of holding a square-cylindrical container; at least two drive motors capable of causing the above pair of endless chains to run and rotate independently, by operating the above drive shafts independently; anda controlling means capable of controlling the drive motors, wherein the above controlling means is capable of carrying the square-cylindrical container in a state that the container holder is holding the square-cylindrical container, which is rhomboid or parallelogram in cross section, by both the rear angular corners in terms of the traveling direction ("1"), the container-carrying-conveyor apparatus according to "1", wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing of the conveyance of the endless chain attached with the holding piece which holds the rear acute-angle-side corner in terms of the traveling direction, relative to that of the endless chain attached with the holding piece which holds the rear obtuse-angle-side corner in terms of the traveling direction, hence synchronizes the end-timing of the conveyance ("2"), the container-carrying-conveyor apparatus according to "1", wherein the control in the controlling means capable of carrying the square-cylindrical container in a state that the container holder is holding the square-cylindrical container, which is rhomboid or parallelogram in cross section, by both the rear angular corners in terms of the traveling direction, slows down the conveying movement of the endless chain attached with the holding piece which holds the rear acute-angle-side corner in terms of the traveling direction, relative to the endless chain attached with the holding piece which holds the rear obtuse-angle-side corner in terms of the traveling direction, hence synchronizes the start-timing and the end-timing of the conveyance ("3"), the container-carrying-conveyor apparatus according to "1", wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing and end-timing of the conveyance of the endless chain attached with the holding piece which holds the rear acute-angle-side corner in terms of the traveling direction, relative to those of the endless chain attached with the holding piece which holds the rear obtuse-angle-side corner in terms of the traveling direction ("4"), the container-carrying-conveyor apparatus according to "1", wherein the control in the controlling means capable of carrying the square-cylindrical container in a state that the container holder is holding the square-cylindrical container, which is rhomboid or parallelogram in cross section, by both the rear angular corners in terms of the traveling direction, causes the endless chain attached with the holding piece which holds the rear obtuse-angle-side corner in terms of the traveling direction to precede in the movement the endless chain attached with the holding piece which holds the rear acute-angle-side corner in terms of the traveling direction, during the time between the start-timing and end-timing of the conveyance ("5"), the container-carrying-conveyor apparatus according to any one of "1" to "5", wherein the controlling means is capable of controlling the number of revolutions made by the drive motors ("6"), the conveyor for carrying square-cylindrical container according to any one of "1" to "6", wherein the controlling means is provided with the detecting mechanism for detecting the load difference between the pair of endless chains, and controls the number of revolutions made by the drive motors such that the load difference between the pair of endless chains is suppressed within the given pre-determined value when a value exceeding the pre-determined value is detected by the detecting mechanism ("7"), the container-carrying-conveyor apparatus according to any one of "1" to "7", wherein the drive motors are servo motors ("8"), the container-carrying-conveyor apparatus according to any one of "1" to "8", wherein the square-cylindrical container is a square-cylindrical container with a bottom ("9"), and the container-carrying-conveyor apparatus according to any one of "1" to "9", wherein the sprockets which the endless chain is disposed about are held at the drive shaft and at the driven shaft ("10").

The present invention further relates to a method for carrying a square-cylindrical container, wherein the square-cylindrical container is carried in a state that the container holder is holding the square-cylindrical container, which is rhomboid or parallelogram in cross section, by both the rear angular corners in terms of the traveling direction, by means of the above control, using the container-carrying-conveyor apparatus comprising: a pair of single-stage or multi-stage endless chains facing parallel to each other and running in rotation on the same level; sprockets which the endless chains are disposed about; a drive shaft and a driven shaft or two drive shafts holding the sprockets; a container holder attached to the above endless chains, including the holding pieces capable of holding the square-cylindrical container; at least two drive motors capable of causing the above pair of endless chains to run and rotate independently, by driving the above drive shafts independently; and a controlling means capable of controlling the drive motors ("11"), the method for carrying the square-cylindrical container according to "11", wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing of the conveyance of the endless chain attached with the holding piece which holds the rear acute-angle-side corner in terms of the traveling direction, relative to that of the endless chain attached with the holding piece which holds the rear obtuse-angle-side corner in terms of the traveling direction, hence synchronizes the end-timing of the conveyance ("12"), the method for carrying the square-cylindrical container according to "11", wherein the control in the controlling means capable of carrying the square-cylindrical container in a state that the container holder is holding the square-cylindrical container, which is rhomboid or parallelogram in cross section, by both the rear angular corners in terms of the traveling direction, slows down the conveying movement of the endless chain attached with the holding piece which holds the rear acute-angle-side corner in terms of the traveling direction, relative to the endless chain attached with the holding piece which holds the rear obtuse-angle-side corner in terms of the traveling direction, hence synchronizes the start-timing and the end-timing of the conveyance ("13"), the method for carrying the square-cylindrical container according to "11", wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing and end-timing of conveyance of the endless chain attached with the holding piece which holds the rear acute-angle-side corner in terms of the traveling direction, relative to those of the endless chain attached with the holding piece which holds the rear obtuse-angle-side corner in terms of the traveling direction ("14"), the method for carrying the square-cylindrical container according to "11" wherein the control in the controlling means capable of carrying the square-cylindrical container in a state that the container holder is holding the square-cylindrical container, which is rhomboid or parallelogram in cross section, by both the rear angular corners in terms of the traveling direction, causes endless chain attached with a holding piece which holds the rear obtuse-angle-side corner in terms of the traveling direction to precede in the movement the endless chain attached with the holding piece which holds the rear acute-angle-side corner in terms of the traveling direction, during the time between the start-timing and end-timing of the conveyance ("15"), the method for carrying the square-cylindrical container according to any one of "11" to "15", wherein the controlling means is capable of controlling the number of revolutions made by the drive motors ("16"), the method for carrying the square-cylindrical container according to any one of "11" to "16", wherein the controlling means is provided with a detecting mechanism for detecting the load difference between the pair of endless chains, and controls the number of revolutions made by the drive motors such that the load difference between the pair of endless chains is suppressed within the given pre-determined value when a value exceeding the pre-determined value is detected by the detecting mechanism ("17"), the method for carrying the square-cylindrical container according to any one of "11" to "17" wherein the drive motors are servo motors ("18"), the method for carrying the square-cylindrical container according to any one of "11" to "18" wherein the square-cylindrical container is a square-cylindrical container with a bottom ("19"), and the method for carrying the square-cylindrical container according to any one of "11" to "19", wherein the sprockets which the endless chain is disposed about are held at the drive shaft and at the driven shaft ("20").

### Brief Description of Drawings

Fig. 1 is a perspective view showing an example of the container-carrying-conveyor apparatus of the present invention.
Fig. 2 is a plan view of the container-carrying-conveyor apparatus shown in Fig. 1.
Fig. 3 is an enlarged fragmentary side view of the conveyor for carrying square-cylindrical containers with a bottom, shown in Fig. 1.
Fig. 4 is an enlarged fragmentary side view of the conveyor for carrying square-cylindrical containers with a bottom provided with four-stage endless chains.
Fig. 5 shows the operating curves of the endless chains controlled by the controlling means of the present invention; and the holding status of the container holders (left; at the start of carrying, middle; in the course of carrying, right; at the end of carrying).
Fig. 6 shows the operating curves of the endless chains controlled by the controlling means according to another embodiment of the present invention; and the holding status of the container holders (left; at the start of carrying, middle; in the course of carrying, right; at the end of carrying).
Fig. 7 shows the operating curves of the endless chains controlled by the controlling means according to another embodiment of the present invention; and the holding status of the container holders (left; at the start of carrying, middle; in the course of carrying, right; at the end of carrying).
Fig. 8 is a drawing illustrating the conventional high-speed liquid-filling machine.
Fig. 9 is a plan view showing schematically the pattern of tensions of endless chains during the container conveyance in the conventional container-carrying-conveyor apparatus.
Fig. 10 is a cross-sectional view of the square-cylindrical container with a bottom being conveyed by the container-carrying-conveyor apparatus of Fig. 9.

### Best Mode of Carrying Out the Invention

The present invention includes any apparatus, without particular limitation, provided that the container-carrying-conveyor apparatus of the present invention comprises: a pair of single-stage or multi-stage endless chains facing parallel to each other and running in rotation on the same level; sprockets which the endless chains are disposed about; a drive shaft and a driven shaft or two drive shafts holding the sprockets; a container holder attached to the above endless chains, including holding pieces capable of holding a square-cylindrical container; at least two drive motors capable of causing the above pair of endless chains to run and rotate independently, by driving the above drive shafts independently; and a controlling means capable of controlling the drive motors; wherein the above controlling means is capable of carrying the square-cylindrical container in a state that the container holder is holding the square-cylindrical container, which is rhomboid or parallelogram in cross section, by both the rear angular corners in terms of the traveling direction. Further, the method for carrying the square-cylindrical container of the present invention includes any method, without particular limitation, provided that it is a method for carrying the square-cylindrical container in a state that the container holder is holding the square-cylindrical container, which is rhomboid or parallelogram in cross section, by both the rear angular corners in terms of the traveling direction by means of the above control, using the container-carrying-conveyor apparatus comprising: a pair of single-stage or multi-stage endless chains facing parallel to each other and running in rotation on the same level; sprockets which the endless chains are disposed about; a drive shaft and a driven shaft or two drive shafts holding the sprockets; a container holder attached to the above endless chains, including holding pieces capable of holding the square-cylindrical container; at least two drive motors capable of causing the above pair of endless chains to run and rotate independently, by driving the above drive shafts independently; and the controlling means capable of controlling the drive motors. With respect to the above endless chains, publicly known endless chains such as roller chains, silent chains and the like may by used.

In addition to the square-cylindrical container with a bottom, the above square-cylindrical container includes a square-cylindrical container with both ends open, for example. Furthermore, the above pair of sprockets may be held at the drive shaft and at the driven shaft, although they may both be held at the drive shafts. Holding both the sprockets at the drive shafts contributes to reducing the load on the endless chain by half compared to the case where they are held at the drive shaft and at the driven shaft. Therefore, the present invention also encompasses the configuration where both the sprockets, disposed with the endless chain which is attached with the holding piece capable of holding the square-cylindrical container by the rear acute-angle-side corner in terms of the traveling direction, are held at the drive shafts; and the sprockets, disposed with the endless chain which is attached with the holding pieces capable of holding the rear obtuse-angle-side corner in terms of the transport direction, are held at the drive shaft and at the driven shaft. Meanwhile, as a matter of convenience, the pair of single-stage or multi-stage endless chains, facing parallel to each other and running in rotation on the same level, includes those of slightly narrower width in the downstream side for goods discharge, compared to the upstream side.

According to the container-carrying conveyor and the method for conveying square-cylindrical containers of the present invention, it is possible to achieve equal elongation of endless chains and hence, extend the lifetime of the endless chains. This, therefore, enables us to utilize all the endless chains used in the container-carrying conveyors without waste, and thus achieve cost reduction. Further, the extended lifetime of endless chains contributes to decreasing the frequency of endless-chain replacement and thus, improves the efficiency of the production of beverages packed in square-cylindrical containers and the like for example, by means of the container-carrying conveyor of the present invention. Moreover, since one-side endless-chain elongation can be prevented, a positional control is facilitated in the container-carrying conveyor of a high-speed liquid-filling machine where rigid positioning is required. The container-carrying conveyor of the present invention can be advantageously used particularly in the high-speed liquid-filling machine of the latest type where the machine length is even more extended and elongation difference is generated between the right and left endless chains.

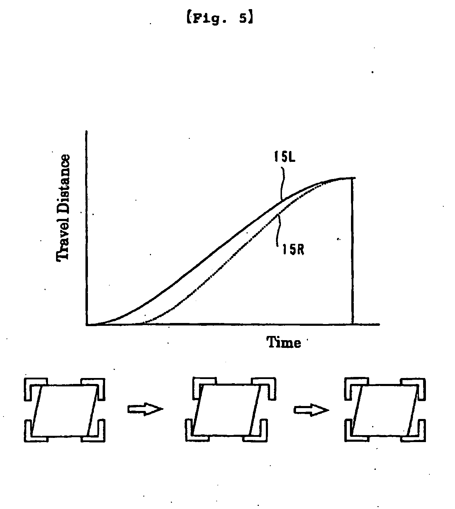

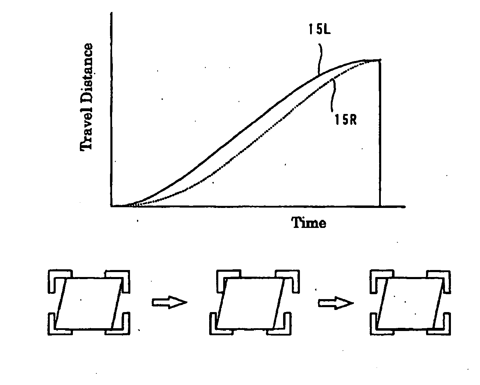

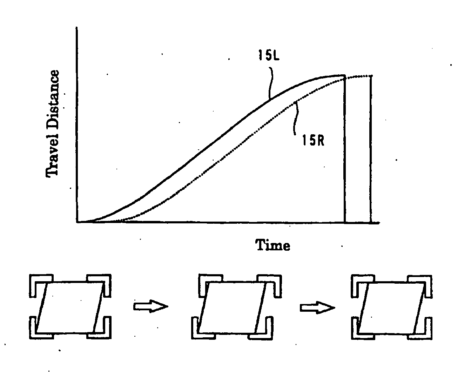

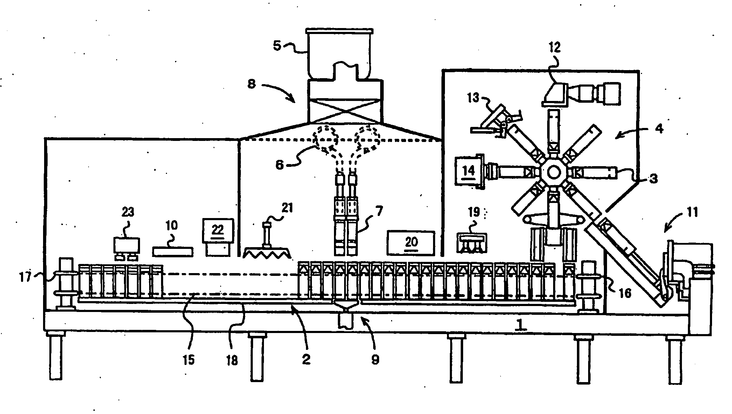

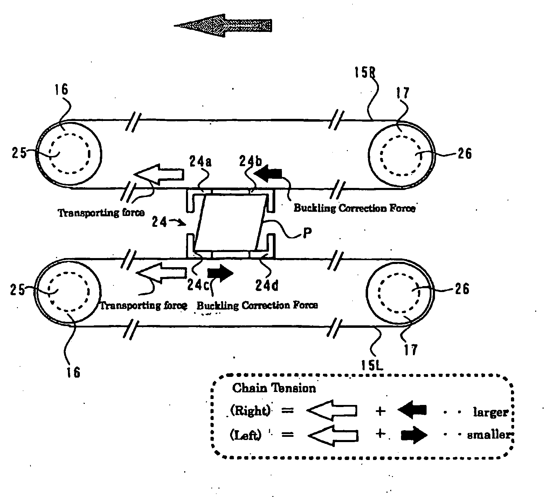

The control in the controlling means capable of carrying the square-cylindrical container in a state that the square-cylindrical container, which is rhomboid or parallelogram in cross section, held by both the rear angular corners in terms of the transport direction, can be specifically exemplified by the control which delays the start-timing of the conveyance of the endless chain attached with the holding piece which holds the rear acute-angle-side corner in terms of the traveling direction (hereinafter, it may be referred to as "the chain on the acute-angle side"), relative to that of the endless chain attached with the holding piece which holds the rear obtuse-angle-side corner in terms of the traveling direction (hereinafter, it may be referred to as "the chain on the obtuse-angle side"), hence synchronizes the end-timing of the conveyance (see Fig. 5). In this type of intermittently-driven carrying conveyor, a pair of endless chains is set to move the same distance per cycle, which indicates that, in the above control, the chain on the acute-angle side is set to move faster in average than the chain on the obtuse-angle side. According to this control, first the chain on the obtuse-angle side moves, then the conveyance of the square-cylindrical container starts at the point when the holding piece attached to the chain on the obtuse-angle side has been brought into contact with the rear angular corner of the square-cylindrical container, that is, the conveyance of the square-cylindrical container starts in a state that the square-cylindrical container is held by both the rear angular corners. As the control in the above controlling means, it is preferable to set within 5 mm the maximum displacement (distance) between the right and left holding pieces in terms of the pair of endless chains, regardless the size of the container. Liquid may be preferably prevented from shaking when the maximum displacement is within 5 mm.

Likewise, the above controlling means can be specifically exemplified by the control, which synchronizes the start-timing and the end-timing of conveyance, but causes the chain on the acute-angle side to move slower in conveyance than the chain on the obtuse-angle side (see Fig. 6). Herein, to cause it to move slower in conveyance means that the endless chain is initially made to move relatively slowly and thereafter, speed-up gradually to move relatively fast. According to this control, the chain on the obtuse-angle side and the chain on the acute-angle side start moving at the same time, but at the start of conveyance, the moving speed of the chain on the obtuse-angle side is relatively faster than the other hence the holding piece attached to the chain on the obtuse-angle side is immediately brought into contact with the rear angular corner of the square-cylindrical container, and thus the square-cylindrical container is carried in a sate that the holding piece attached to the chain on the obtuse-angle side and the holding piece attached to the chain on the acute-angle side are both holding the respective rear corners of the square-cylindrical container. As the control in the above controlling means, it is preferable to set within 5 mm the maximum displacement (distance) between the right and left holding pieces in terms of the pair of endless chains, regardless the size of the container. Liquid may be preferably prevented from shaking when the maximum displacement is within 5 mm.

Likewise, the above controlling means can be specifically exemplified by the control, which delays the start-timing and end-timing of conveyance of the chain on the acute-angle side relative to those of the chain on the obtuse-angle side (see Fig. 7). According to this control, first the chain on the obtuse-angle side moves and hence, the holding piece attached to the chain on the obtuse-angle side is immediately brought into contact with the rear angular corner of the square-cylindrical container, and thus the square-cylindrical container is carried in a sate that holding piece on the chain on the acute-angle side and the holding piece on the chain on the obtuse-angle side are both holding the respective rear angular corners of the square-cylindrical container and thereafter, the chain on the acute-angle side moves just as much as the displacement (distance) between the right and left holding pieces in terms of the pair of endless chains. It is preferable to set the conveying movement of the chain on the obtuse-angle side and the chain on the acute-angle side such that the respective chains bear equal loads. As the control in this controlling means, too, it is preferable to set within 5 mm the maximum displacement (distance) between the right and left holding pieces in terms of the pair of endless chains, regardless the size of the container. Liquid may be preferably prevented from shaking where the maximum displacement is within 5 mm.

The above controls of the start-and-end timings of the endless chains and of the conveying movement can be effected by controlling the start-and-end timings of driving and the number of revolutions made by the drive motors. The drive motors include any motors capable of implementing the above control, including publicly known drive motors, although they are preferably exemplified by servo motors or a pulse motors which facilitate independent setting of the traveling movement of the endless chains and the start timing of the conveyance, for the right and left endless chains respectively, and are of excellent controlling capability.

Additionally, the preferable controlling means is provided with a detecting mechanism which detects the load difference between the pair of endless chains. It is preferable that the number of revolutions made by the drive motor is so controlled as to suppress the load difference between the pair of endless chains within the given pre-determined value when a value exceeding such pre-determined value is detected by the detecting mechanism. The load on the above endless chain is usually detectable as a torque applied around the drive shaft. Further, the detected torque may either be an effective torque or a peak torque, the torque difference being preferably set within 10 % usually.

As a square-cylindrical container with a bottom used in the method for carrying the square-cylindrical containers of the present invention, any type of square-cylindrical container with a bottom may be used including those made of paper, plastics, and the like. However, the preferable square-cylindrical container with a bottom is made of paper since the present invention is effective for preventing one-side endless-chain elongation induced by carrying square-cylindrical containers with a bottom that are parallelogram in cross section. Further, the square-cylindrical container with a bottommaybe of cuboidal or cubic shape with the quadrate bottom and of cuboidal shape with the rectangular bottom for example, and their angular corners may be rounded. Furthermore, regarding the holding pieces attached to the above endless chain, there is no limitation with respect to the shape and the number of such holding pieces provided that they are capable of holding and carrying the square-cylindrical container with a bottom, although the preferable configuration enables the holding pieces to hold the square-cylindrical container with a bottom by both the rear angular corners in terms of the traveling direction, and still more preferable configuration by the four angular corners of the square-cylindrical container with a bottom.

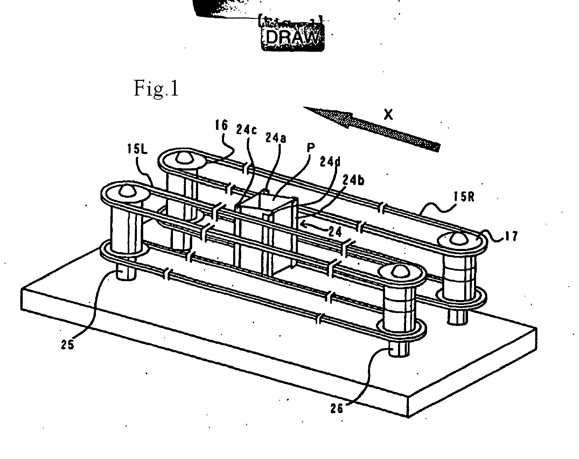

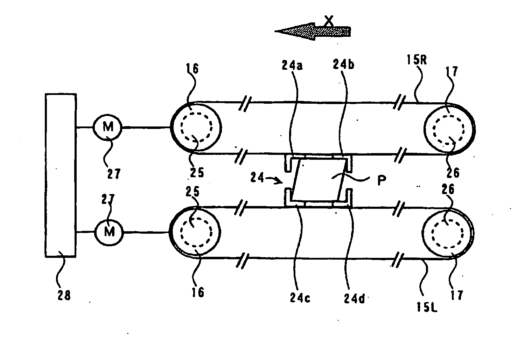

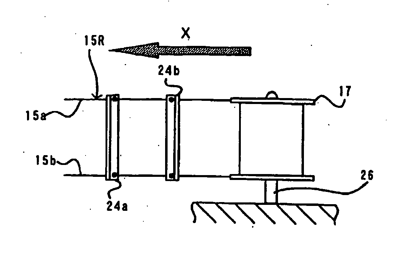

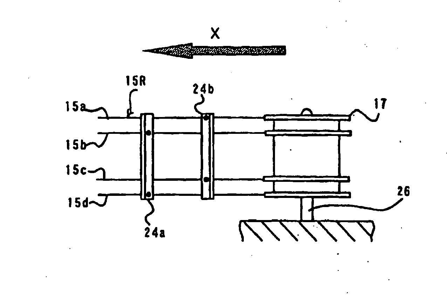

The container-carrying conveyor of the present invention is explained by reference to the following drawings. Fig. 1 and Fig. 2 are a perspective view and a plan view of a container-carrying-conveyor apparatus, for explaining the present invention. This container-carrying-conveyor apparatus is the conveyor apparatus for carrying square-cylindrical container P with a bottom, comprising: a pair of endless chains 15 respectively comprised of over-and-under, double-stage endless chains facing parallel to each other and running in rotation on the same level; sprockets 16 and 17 which the endless chains 15 are disposed about; a drive shaft 25 and a driven shaft 26 holding the sprockets 16 and 17; a container holder 24 fixed at about even intervals to the above endless chains 15; at least two servo motors 27 capable of driving the right and left endless chains 15 independently by imparting motion to the drive shafts 25 of the endless chains 15; and the controlling means 28 which controls the timing and the number of revolutions made by the servo motors. Additionally, the controlling means 28 of the container-carrying-conveyor apparatus of the present invention may further comprise the detecting mechanism (not shown in the Figures) which detects the load difference between the pair of endless chains 15. Meanwhile, in the present invention, the term "front" and "rear" indicate the traveling direction (transport direction) and the counter direction (returning direction) of the conveyor, the term "right" and "left" indicate the right hand side and the left hand side in terms of the traveling direction, and the term "over" and "under" indicate the higher and lower heights in terms of the level surface. Further, the arrow X in the Figures indicates the traveling direction of the conveyor. Additionally, the endless chains 15 positioned on the right hand side in terms of the traveling direction is described as endless chains 15R and the endless chains 15 positioned on the left hand side in terms of the traveling direction is described as endless chains 15L.

Container holder 24 is comprised of the holding pieces 24a, 24b, 24c, and 24d which are capable of holding the four angular corners of the square-cylindrical container P with a bottom. In the Figures, the holding piece 24a and the holding piece 24b are attached to the double-stage endless chains 15R and the holding piece 24c and the holding piece 24d are attached to the double-stage endless chains 15L so that the holding piece 24a holds the square-cylindrical container P with a bottom, which is deformed into parallelogram in cross-section, by the front obtuse-angle-side corner in terms of the traveling direction; the holding piece 24b holds the square-cylindrical container P with a bottom by the rear acute-angle-side corner in terms of the traveling direction; the holding piece 24c holds the square-cylindrical container P with a bottom by the front acute-angle-side corner in terms of the traveling direction; and the holding piece 24d holds the square-cylindrical container P with a bottom by the rear obtuse-angle-side corner in terms of the traveling direction.

The container-carrying conveyor may be essentially provided with a pair single-stage endless chains facing parallel to each other and running in rotation on the same level, but not with multi-stage endless chains necessarily. However, as shown in Figs. 1 to 3, it is preferable to be provided with over-and-under, double-stage endless chains since each holding piece may be secured at two places, over and under, to the endless chains, which permits the stable holding of the square-cylindrical container with a bottom. Fig. 3 is a side view showing the endless chains 15R which are on the right hand side in terms of the traveling direction, where the endless chains 15R is provided with double-stage endless chains 15a and 15b, such endless chains 15a and 15b being attached with the front holding piece 24a and the rear holding piece 24b. In this instance, compared to the endless chains 15L, a larger load is exerted on the endless chains 15R attached with the holding piece 24b which holds the square-cylindrical container P by the rear acute-angle corner in terms of the traveling direction at the time of conveyance. Therefore, the square-cylindrical container with a bottom is carried in a state that the container holder is holding the square-cylindrical container with a bottom by both the rear angular corners in terms of the traveling direction whereby the loads on the right and left endless chains can be equalized.

Additionally, when the container-carrying conveyor is provided with over-and-under, four-stage endless chains capable of adjusting container holders to conform to the angular shape and outer dimensions of the above container, such four-stage endless chains are provided with double-stage endless chains, one attached with the front holding pieces and the other with the rear holding pieces in terms of the traveling direction. An example of a container-carrying conveyor provided with such over-and-under four-stage endless chains is shown in Fig. 4. Fig. 4 shows a side view of the right hand side endless chains 15R in terms of the traveling direction, where endless chain 15R is provided with four stages of endless chains 15a, 15b, 15c, and 15d, the rear holding piece 24b being attached to the endless chains 15a and 15c, and the front holding piece 24a to the endless chains 15b and 15d. In this instance, among the endless chains 15R, the endless chains 15a and 15c bear larger loads, being attached with holding piece 24b which holds the square-cylindrical container by the rear acute-angle corner in terms of the traveling direction. Therefore, the square-cylindrical container with a bottom is carried in a state that the container holder is holding the square-cylindrical container with a bottom by both the rear angular corners in terms of the traveling direction whereby the loads on the right and left endless chains can be equalized.

Subsequently, the specific controlling method is explained. Figs. 5 to 7 show: the operating curves of the chains on the obtuse-angle side (15L) and the chains on the acute-angle side (15R) where the controlling means 28 controls the servo motors 27 independently with respect to the timings and the number of revolutions; and the holding statuses of the container holders (left; at the start of conveying, middle; in the course of conveying, right; at the end of conveying).

In the control shown in Fig. 5 the container holders are caused to disaccord in the start-timing of conveyance, wherein first the obtuse-angle-side chains (15L) move, and the conveying starts at the point when the holding piece 24d attached to the obtuse-angle-side chains is brought into contact with the rear angular corner of the square-cylindrical container, that is, when both the rear angular corners of the square-cylindrical containers have been held by holding pieces 24b and 24d. The conveying proceeds in this status, moving speed of the acute-angle-side chains (15R) becoming relatively faster prior to the end of the conveying and thereafter, the obtuse-angle-side chains (15L) and the acute-angle-side chains (15R) stop, when the conveying is completed. Additionally, the maximum displacement (distance) between the right and left holding pieces in terms of the pair of endless chains is set within 5 mm regardless the size of the containers. In the control shown in Fig. 6, both of the chains are caused to synchronize in the start-timing and the end-timing of the conveyance, wherein the chains on the obtuse-angle side (15L) and the chains on the acute-angle side (15R) start moving at the same time, but as soon as the conveying is started, the obtuse-angle-side chains (15L) move relatively faster, immediately bringing holding piece 24d attached to the obtuse-angle-side chains (15L) into contact with the rear angular corner of the square-cylindrical container. Thus, the conveying of the square-cylindrical container proceeds in a state that the holding pieces 24d on the obtuse-angle-side chains (15L) and 24b on the acute-angle-side chains (15R) are both holding the respective rear angular corners of the square-cylindrical containers, the speed of the acute-angle-side chains (15R) becoming relatively faster prior to the end of conveying and thereafter, the obtuse-angle-side chains (15L) and the acute-angle-side chains (15R) stop, when the conveying is completed. Additionally, the maximum displacement (distance) between the right and left holding pieces in terms of the pair the endless chains is set within 5 mm regardless the size of the containers.

In the control in Fig. 7 the endless chains are caused to disaccord in the start-timing the end-timing of the conveyance, wherein the obtuse-angle-side chains (15L) move first, and the conveying starts at the point when the holding piece 24d attached to the obtuse-angle-side chains is brought into contact with the rear angular corner of the square-cylindrical container, that is, when both the rear angular corners of the square-cylindrical containers have been held by holding pieces 24band24d. The conveying proceeds in this status and thereafter, the obtuse-angle-side chains (15L) stop and subsequently, the acute-angle-side chains (15R) stop, when the conveying is completed. In this state, holding piece 24d attached to the obtuse-angle-side chains (15L) is preceding the holding piece 24b on the acute-angle side, the displacement (distance) between the right and left holding pieces being set within 5 mm at maximum. With respect to the operating curves of the obtuse-angle-side chains (15L) and the acute-angle-side chains (15R), no particular limitation is set. However, the control is facilitated and thus preferable when the acute-angle-side chains and the obtuse-angle-side chains are driven according to the same operating curve, the acute-angle-side chains being simply delayed by a phase.

### example

A test was performed to investigate whether the torques on the endless chains become equalized in different traveling movements of endless chains in the conveyance of milk cartons, by actually using the container-conveying apparatus of high-speed liquid-filling machine (TYPE UPN-SE160; manufactured by Shikoku Kakoki Co., Ltd.) Specifically, the torque values on the obtuse-angle-side chains and acute-angle-side chains were measured in the case where the obtuse-angle-side chains and the acute-angle-side chains were operated at the same traveling speed (control) and in other cases where the phase of the operating curve of the acute-angle-side chains was displaced by 3° and 4°respectively relative to the obtuse-angle-side chains as shown in Fig. 7, where the displacement (distance) between the holding pieces attached to the obtuse-angle side and those attached to the acute-angle side were about 2 mm to 3 mm at maximum respectively. The conveying conditions and the measurement results are presented below. The torque values are presented as relative values to the rated torque of a servo motor of 100%. The values appear to be proportional to the tension of endless chains.

### [Conveying condition]

| | |
|---|---|
| Number of filling: | 3500 times/hour |
| Distance of conveyance: | 178 mm/time |
| Allocated degrees at the time of conveyance: | 190 deg. |
| Subject of conveyance: | cartons of 1000 ml of milk |
| (square cartons of 70 mm X 70 mm) | |

### [Result of conveyance]

### (Control)

| | | |
|---|---|---|
| Peak torque | | |
| | Obtuse-angle side: | 55-57% |
| | Acute-angle side: | 75-77% |
| Effective torque | | |
| | Obtuse-angle side: | 17% |
| | Acute-angle side: | 29-30% |

### (Start-timing of conveyance displaced by 3°)

| | | |
|---|---|---|
| Peak torque | | |
| | Obtuse-angle side: | 69% |
| | Acute-angle side: | 68% |
| Effective torque | | |
| | Obtuse-angle side: | 23% |
| | Acute-angle side: | 30% |

### (Start-timing of conveyance displaced by 4°)

| | | |
|---|---|---|
| Peak torque | | |
| | Obtuse-angle side: | 69% |
| | Acute-angle side: | 63% |
| Effective torque | | |
| | Obtuse-angle side: | 23% |
| | Acute-angle side: | 28% |

The above results have revealed that displacing endless chains by the phase of operating curves contributes to reducing torque difference between the obtuse-angle-side chains and the acute-angle-side chains. Also, the observation has shown that the level of liquid shaking in the container under conveyance was as low as that of the control. In view of the above, the container-carrying-conveyor apparatus of the present invention has proved itself to be capable of equalizing the levels of the load exerted on the obtuse-angle-side chains and the acute-angle-side chains and therefore, is highly effective for preventing one-side elongation of endless chains.

### Industrial Applicability

According to the container-carrying-conveyor apparatus and the method for conveying square-cylindrical containers of the present invention, it is possible to equalize the loads on the endless chains and hence equalize elongations, whereby the lifetime of endless chains can be extended.

### Explanation of Letters or Numerals

- 15.: endless chain
- 24.: container holder
- 25.: drive shaft
- 27.: servo motor
- 28.: controlling means
- X:: the traveling direction of the conveyor
- P:: square-cylindrical container with a bottom

## Claims

1. A container-carrying-conveyor apparatus comprising: a pair of single-stage or multi-stage endless chains facing parallel to each other and running in rotation on the same level; sprockets which the endless chains are disposed about; a drive shaft and a driven shaft or two drive shafts holding the sprockets; a container holder attached to the above endless chains, including holding pieces capable of holding a square-cylindrical container; at least two drive motors capable of causing the above pair of endless chains to run and rotate independently, by driving the above drive shafts independently; and controlling means capable of controlling the drive motors, wherein the above controlling means is capable of carrying the square-cylindrical container in a state that the container holder is holding the square-cylindrical container, which is rhomboid or parallelogram in cross section, by both the rear angular corners in terms of the traveling direction.

2. The container-carrying-conveyor apparatus according to claim 1, wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing of the conveyance of the endless chain attached with the holding piece which holds the rear acute-angle-side corner in terms of the traveling direction, relative to that of the endless chain attached with the holding piece which holds the rear obtuse-angle-side corner in terms of the traveling direction, hence synchronizes the end-timing of the conveyance.

3. The container-carrying-conveyor apparatus according to claim 1, wherein the control in the controlling means capable of carrying the square-cylindrical container in a state that the container holder is holding the square-cylindrical container, which is rhomboid or parallelogram in cross section, by both the rear angular corners in terms of the traveling direction, slows down the conveying movement of the endless chain attached with the holding piece which holds the rear acute-angle-side corner in terms of the traveling direction, relative to the endless chain attached with the holding piece which holds the rear obtuse-angle-side corner in terms of the traveling direction, hence synchronizes the start-timing and the end-timing of the conveyance.

4. The container-carrying-conveyor apparatus according to claim 1, wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing and end-timing of the conveyance of the endless chain attached with the holding piece which holds the rear acute-angle-side corner in terms of the traveling direction, relative to those of the endless chain attached with the holding piece which holds the rear obtuse-angle-side corner in terms of the traveling direction.

5. The container-carrying-conveyor apparatus according to claim 1, wherein the control in the controlling means capable of carrying the square-cylindrical container in a state that the container holder is holding the square-cylindrical container, which is rhomboid or parallelogram in cross section, by both the rear angular corners in terms of the traveling direction, causes the endless chain attached with the holding piece which holds the rear obtuse-angle-side corner in terms of the traveling direction to precede in the movement the endless chain attached with the holding piece which holds the rear acute-angle-side corner in terms of the traveling direction, during the time between the start-timing and end-timing of the conveyance.

6. The container-carrying-conveyor apparatus according to any one of claims 1 to 5, wherein the controlling means is capable of controlling the number of revolutions made by the drive motors.

7. The conveyor for carrying square-cylindrical container according to any one of claims 1 to 6, wherein the controlling means is provided with a detecting mechanism for detecting the load difference between the pair of endless chains, and controls the number of revolutions made by the drive motors such that the load difference between the pair of endless chains is suppressed within the given pre-determined value when a value exceeding the pre-determined value is detected by the detecting mechanism.

8. The container-carrying-conveyor apparatus according to any one of claims 1 to 7, wherein the drive motors are servo motors.

9. The container-carrying-conveyor apparatus according to any one of claims 1 to 8, wherein the square-cylindrical container is a square-cylindrical container with a bottom.

10. The container-carrying-conveyor apparatus according to any one of claims 1 to 9, wherein the sprockets which the endless chain is disposed about are held at the drive shaft and at the driven shaft.

11. A method for carrying a square-cylindrical container wherein the square-cylindrical container is carried in a state that the container holder is holding the square-cylindrical container, which is rhomboid or parallelogram in cross section, by both the rear angular corners in terms of the traveling direction, by means of a control, using the container-carrying-conveyor apparatus comprising: a pair of single-stage or multi-stage endless chains facing parallel to each other and running in rotation on the same level; sprockets which the endless chains are disposed about; a drive shaft and a driven shaft or two drive shafts holding the sprockets; a container holder attached to the above endless chains, including holding pieces capable of holding the square-cylindrical container; at least two drive motors capable of causing the above pair of endless chains to run and rotate independently, by driving the above drive shafts independently; and a controlling means capable of controlling the drive motors.

12. The method for carrying the square-cylindrical container according to claim 11, wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing of the conveyance of the endless chain attached with the holding piece which holds the rear acute-angle-side corner in terms of the traveling direction, relative to that of the endless chain attached with the holding piece which holds the rear obtuse-angle-side corner in terms of the traveling direction, hence synchronizes the end-timing of the conveyance.

13. The method for carrying the square-cylindrical container according to claim 11, wherein the control in the controlling means capable of carrying the square-cylindrical container in a state that the container holder is holding the square-cylindrical container, which is rhomboid or parallelogram in cross section, by both the rear angular corners in terms of the traveling direction, slows down the conveying movement of the endless chain attached with the holding piece which holds the rear acute-angle-side corner in terms of the traveling direction, relative to the endless chain attached with the holding piece which holds the rear obtuse-angle-side corner in terms of the traveling direction, hence synchronizes the start-timing and the end-timing of the conveyance.

14. The method for carrying the square-cylindrical container according to claim 11, wherein the control in the controlling means capable of carrying the square-cylindrical container in a state that the container holder is holding the square-cylindrical container, which is rhomboid or parallelogram in cross section, by both the rear angular corners in terms of the traveling direction, delays the start-timing and end-timing of the conveyance of the endless chain attached with the holding piece which holds the rear acute-angle-side corner in terms of the traveling direction, relative to those of the endless chain attached with the holding piece which holds the rear obtuse-angle-side corner in terms of the traveling direction.

15. The method for carrying the square-cylindrical container according to claim 11, wherein the control in the controlling means capable of carrying the square-cylindrical container in a state that the container holder is holding the square-cylindrical container, which is rhomboid or parallelogram in cross section, by both the rear angular corners in terms of the traveling direction, causes endless chain attached with a holding piece which holds the rear obtuse-angle-side corner in terms of the traveling direction to precede in the movement the endless chain attached with the holding piece which holds the rear acute-angle-side corner in terms of the traveling direction, during the time between the start-timing and end-timing of the conveyance.

16. The method for carrying the square-cylindrical container according to any one of claims 11 to 15, wherein the controlling means is capable of controlling the number of revolutions made by the drive motors.

17. The method for carrying the square-cylindrical container according to any one of claims 11 to 16, wherein the controlling means is provided with a detecting mechanism for detecting the load difference between the pair of endless chains, and controls the number of revolutions made by the drive motors such that the load difference between the pair of endless chains is suppressed within the given pre-determined value when a value exceeding the pre-determined value is detected by the detecting mechanism.

18. The method for carrying the square-cylindrical container according to any one of claims 11 to 17, wherein the drive motors are servo motors.

19. The method for carrying the square-cylindrical container according to any one of claims 11 to 18, wherein the square-cylindrical container is a square-cylindrical container with a bottom.

20. The method for carrying the square-cylindrical container according to any one of claims 11 to 19, wherein the sprockets which the endless chain is disposed about are held at the drive shaft and at the driven shaft.

## Patentansprüche

1. Behältertrage-Fördervorrichtung mit: einem Paar einstufiger oder mehrstufiger Endlosketten, die einander parallel zugewandt sind und in Drehung auf derselben Höhe verlaufen, Kettenrädern, um die herum die Endlosketten angeordnet sind, einer Antriebswelle und einer Abtriebswelle oder zwei Antriebswellen, die die Kettenräder halten, einem Behälterhalter, der an den obigen Endlosketten befestigt ist und Halteteile enthält, die einen viereckig zylindrischen Behälter halten können, mindestens zwei Antriebsmotoren, die bewirken können, dass das obige Paar von Endlosketten unabhängig läuft und rotiert, indem sie die obigen Antriebswellen unabhängig antreiben, und einer Steuereinrichtung, die die Antriebsmotoren steuern kann, wobei die obige Steuereinrichtung dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält.

2. Behältertrage-Fördervorrichtung nach Anspruch 1, bei der die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, den Startzeitpunkt der Förderung der Endloskette, die an dem Halteteil befestigt ist, das die in Bezug auf die Bewegungsrichtung hintere Ecke auf der spitzwinkligen Seite hält, in Bezug auf denjenigen der Endloskette verzögert, die an dem Halteteil befestigt ist, das die in Bezug auf die Bewegungsrichtung hintere Ecke auf der stumpfwinkligen Seite hält, und somit den Endzeitpunkt der Förderung synchronisiert.

3. Behältertrage-Fördervorrichtung nach Anspruch 1, bei der die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, die Förderbewegung der Endloskette, die an dem Halteteil befestigt ist, das die in Bezug auf die Bewegungsrichtung hintere Ecke auf der spitzwinkligen Seite hält, in Bezug auf die Endloskette verlangsamt, die an dem Halteteil befestigt ist, das die in Bezug auf die Bewegungsrichtung hintere Ecke auf der stumpfwinkligen Seite hält, und somit den Startzeitpunkt und den Endzeitpunkt der Förderung synchronisiert.

4. Behältertrage-Fördervorrichtung nach Anspruch 1, bei der die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, den Startzeitpunkt und den Endzeitpunkt der Förderung der Endloskette, die an dem Halteteil befestigt ist, das die in Bezug auf die Bewegungsrichtung hintere Ecke auf der spitzwinkligen Seite hält, in Bezug auf diejenigen der Endloskette verzögert, die an dem Halteteil befestigt ist, das die in Bezug auf die Bewegungsrichtung hintere Ecke auf der stumpfwinkligen Seite hält.

5. Behältertrage-Fördervorrichtung nach Anspruch 1, bei der die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, bewirkt, dass die Endloskette, die an dem Halteteil befestigt ist, das die in Bezug auf die Bewegungsrichtung hintere Ecke auf der stumpfwinkligen Seite hält, während der Zeit zwischen dem Startzeitpunkt und dem Endzeitpunkt der Förderung in der Bewegung der Endloskette vorausgeht, die an dem Halteteil befestigt ist, das die in Bezug auf die Bewegungsrichtung hintere Ecke auf der spitzwinkligen Seite hält.

6. Behältertrage-Fördervorrichtung nach einem der Ansprüche 1 bis 5, bei der die Steuereinrichtung dazu in der Lage ist, die Anzahl von Umdrehungen zu steuern, die von den Antriebsmotoren durchgeführt werden.

7. Fördervorrichtung zum Tragen von viereckig zylindrischen Behältern nach einem der Ansprüche 1 bis 6, bei der die Steuereinrichtung mit einem Detektionsmechanismus zum Detektieren der Lastdifferenz zwischen dem Paar von Endlosketten ausgestattet ist und die Anzahl von Umdrehungen, die von den Antriebsmotoren durchgeführt werden, in der Weise steuert, dass die Lastdifferenz zwischen dem Paar von Endlosketten innerhalb eines gegebenen vorbestimmten Wertes unterdrückt wird, wenn von dem Detektionsmechanismus ein Wert detektiert wird, der den vorbestimmten Wert überschreitet.

8. Behältertrage-Fördervorrichtung nach einem der Ansprüche 1 bis 7, bei der die Antriebsmotoren Servomotoren sind.

9. Behältertrage-Fördervorrichtung nach einem der Ansprüche 1 bis 8, bei der der viereckig zylindrische Behälter ein viereckig zylindrischer Behälter mit einem Boden ist.

10. Behältertrage-Fördervorrichtung nach einem der Ansprüche 1 bis 9, bei der die Kettenräder, um die herum die Endloskette angeordnet ist, an der Antriebswelle und an der Abtriebswelle gehalten werden.

11. Verfahren zum Tragen eines viereckig zylindrischen Behälters, bei dem der viereckig zylindrische Behälter mit Hilfe einer Steuerung in einem solchen Zustand getragen wird, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, unter Verwendung der Behältertrage-Fördervorrichtung, die aufweist: ein Paar einstufiger oder mehrstufiger Endlosketten, die einander parallel zugewandt sind und in Drehung auf derselben Höhe verlaufen, Kettenräder, um die herum die Endlosketten angeordnet sind, eine Antriebswelle und eine Abtriebswelle oder zwei Antriebswellen, die die Kettenräder halten, einen Behälterhalter, der an den obigen Endlosketten befestigt ist und Halteteile enthält, die den viereckig zylindrischen Behälter halten können, mindestens zwei Antriebsmotoren, die bewirken können, dass das obige Paar von Endlosketten unabhängig läuft und rotiert, indem sie die obigen Antriebswellen unabhängig antreiben, und eine Steuereinrichtung, die die Antriebsmotoren steuern kann.

12. Verfahren zum Tragen des viereckig zylindrischen Behälters nach Anspruch 11, bei dem die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, den Startzeitpunkt der Förderung der Endloskette, die an dem Halteteil befestigt ist, das die in Bezug auf die Bewegungsrichtung hintere Ecke auf der spitzwinkligen Seite hält, in Bezug auf denjenigen der Endloskette verzögert, die an dem Halteteil befestigt ist, das die in Bezug auf die Bewegungsrichtung hintere Ecke auf der stumpfwinkligen Seite hält, und somit den Endzeitpunkt der Förderung synchronisiert.

13. Verfahren zum Tragen des viereckig zylindrischen Behälters nach Anspruch 11, bei dem die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, die Förderbewegung der Endloskette, die an dem Halteteil befestigt ist, das die in Bezug auf die Bewegungsrichtung hintere Ecke auf der spitzwinkligen Seite hält, in Bezug auf die Endloskette verlangsamt, die an dem Halteteil befestigt ist, das die in Bezug auf die Bewegungsrichtung hintere Ecke auf der stumpfwinkligen Seite hält, und somit den Startzeitpunkt und den Endzeitpunkt der Förderung synchronisiert.

14. Verfahren zum Tragen des viereckig zylindrischen Behälters nach Anspruch 11, bei dem die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, den Startzeitpunkt und den Endzeitpunkt der Förderung der Endloskette, die an dem Halteteil befestigt ist, das die in Bezug auf die Bewegungsrichtung hintere Ecke auf der spitzwinkligen Seite hält, in Bezug auf diejenigen der Endloskette verzögert, die an dem Halteteil befestigt ist, das die in Bezug auf die Bewegungsrichtung hintere Ecke auf der stumpfwinkligen Seite hält.

15. Verfahren zum Tragen des viereckig zylindrischen Behälters nach Anspruch 11, bei dem die Steuerung in der Steuereinrichtung, die dazu in der Lage ist, den viereckig zylindrischen Behälter in einem solchen Zustand zu tragen, dass der Behälterhalter den viereckig zylindrischen Behälter, der im Querschnitt rhomboid- oder parallelogrammförmig ist, an beiden in Bezug auf die Bewegungsrichtung hinteren abgewinkelten Ecken hält, bewirkt, dass die Endloskette, die an dem Halteteil befestigt ist, das die in Bezug auf die Bewegungsrichtung hintere Ecke auf der stumpfwinkligen Seite hält, während der Zeit zwischen dem Startzeitpunkt und dem Endzeitpunkt der Förderung in der Bewegung der Endloskette vorausgeht, die an dem Halteteil befestigt ist, das die in Bezug auf die Bewegungsrichtung hintere Ecke auf der spitzwinkligen Seite hält.

16. Verfahren zum Tragen des viereckig zylindrischen Behälters nach einem der Ansprüche 11 bis 15, bei dem die Steuereinrichtung dazu in der Lage ist, die Anzahl von Umdrehungen zu steuern, die von den Antriebsmotoren durchgeführt werden.

17. Verfahren zum Tragen des viereckig zylindrischen Behälters nach einem der Ansprüche 11 bis 16, bei dem die Steuereinrichtung mit einem Detektionsmechanismus zum Detektieren der Lastdifferenz zwischen dem Paar von Endlosketten ausgestattet ist und die Anzahl von Umdrehungen, die von den Antriebsmotoren durchgeführt werden, in der Weise steuert, dass die Lastdifferenz zwischen dem Paar von Endlosketten innerhalb eines gegebenen vorbestimmten Wertes unterdrückt wird, wenn von dem Detektionsmechanismus ein Wert detektiert wird, der den vorbestimmten Wert überschreitet.

18. Verfahren zum Tragen des viereckig zylindrischen Behälters nach einem der Ansprüche 11 bis 17, bei dem die Antriebsmotoren Servomotoren sind.

19. Verfahren zum Tragen des viereckig zylindrischen Behälters nach einem der Ansprüche 11 bis 18, bei dem der viereckig zylindrische Behälter ein viereckig zylindrischer Behälter mit einem Boden ist.

20. Verfahren zum Tragen des viereckig zylindrischen Behälters nach einem der Ansprüche 11 bis 19, bei dem die Kettenräder, um die herum die Endloskette angeordnet ist, an der Antriebswelle und an der Abtriebswelle gehalten werden.

## Revendications

1. Appareil transporteur de conteneurs à chaînes comprenant : une paire de chaînes sans fin simples ou multiples se faisant face parallèlement les unes aux autres et tournant en rotation sur le même niveau ; des roues dentées autour desquelles les chaînes sans fin sont disposées ; un arbre d'entraînement et un arbre entraîné ou deux arbres d'entraînement maintenant les roues dentées ; un support de conteneur fixé sur les chaînes sans fin mentionnées ci-dessus, incluant des pièces de retenue capables de retenir un conteneur carré-cylindrique ; au moins deux moteurs d'entraînement capables de provoquer l'avance et la rotation indépendantes de la paire de chaînes sans fin mentionnée ci-dessus, en entraînant les arbres d'entraînement mentionnés ci-dessus de manière indépendante ; et un moyen de commande capable de contrôler les moteurs d'entrainement, dans lequel le moyen de commande mentionné ci-dessus est apte à transporter le conteneur carré-cylindrique dans un état où le support de conteneur retient le conteneur carré-cylindrique qui est de section rhomboïde ou en parallélogramme, par les deux coins angulaires arrière en termes de la direction de circulation.

2. Appareil transporteur de conteneurs à chaînes selon la revendication 1, dans lequel la commande dans le moyen de commande capables de porter le conteneur carré-cylindrique dans un état où le support de conteneur retient le conteneur carré-cylindrique qui est de section rhomboïde ou en parallélogramme, par les deux coins angulaires arrière en termes de la direction de circulation, retarde le moment de démarrage de l'avance de la chaîne sans fin fixée sur la pièce de retenue qui retient le coin latéral à angle aigu arrière en termes de la direction de circulation, par rapport à celle de la chaîne sans fin fixée par des pièces de retenue qui retiennent le coin latéral à angle obtus arrière en termes de la direction de circulation, et qui synchronise donc le moment de la fin du transport.

3. Appareil transporteur de conteneurs à chaînes selon la revendication 1, dans lequel la commande dans le moyen de commande capable de transporter un conteneur carré-cylindrique dans un état où le dispositif de retenue de conteneur retient le conteneur carré-cylindrique, qui est de section rhomboïde ou en parallélogramme, par les deux coins angulaires arrière en termes de la direction de circulation, ralentit le mouvement de transport de la chaîne sans fin fixée par la pièce de fixation qui retient le coin latéral à angle aigu arrière en termes de la direction de circulation, par rapport à la chaîne sans fin fixée par la pièce de retenue qui retient le coin latéral à angle obtus arrière en termes de la direction de circulation, et donc synchronise le moment du démarrage et le moment de la fin du transport.

4. Appareil transporteur de conteneurs à chaînes selon la revendication 1, dans lequel la commande dans le moyen de commande est capable de porter le conteneur carré-cylindrique dans un état où le support de conteneur retient le conteneur carré-cylindrique, qui a une section rhomboïde ou en parallélogramme, par les deux coins angulaires arrière en termes de la direction de circulation, retarde le moment du démarrage et le moment de la fin du transport de la chaîne sans fin fixée par la pièce de support qui retient le coin latéral à angle aigu arrière en termes de la direction de circulation, par rapport à celles des chaînes sans fin fixées par la pièce de retenue qui retient le coin latéral à angle obtus arrière en termes de la direction de circulation.

5. Appareil transporteur de conteneurs à chaînes selon la revendication 1, dans lequel la commande dans le moyen de commande capable de porter le conteneur carré-cylindrique dans un état où le support de conteneur supporte le conteneur carré-cylindrique, qui est de section rhomboïde ou en parallélogramme, par les deux coins angulaires arrière en termes de la direction de circulation, provoque le fait que la chaîne sans fin fixée par la pièce de retenue qui retient le coin latéral à angle obtus arrière en termes de la direction de circulation précède le mouvement de la chaîne sans fin fixée par la pièce de retenue qui retient le coin latéral à angle aigu arrière en termes de la direction de circulation, pendant la période entre le moment du départ et le moment de la fin du transport.

6. Appareil transporteur de conteneurs à chaînes selon l'une quelconque des revendications 1 à 5, dans lequel le moyen de commande est capable de commander le nombre de tours effectués par les moteurs d'entraînement.

7. Convoyeur destiné à transporter des conteneurs carrés-cylindriques selon l'une quelconque des revendications 1 à 6, dans lequel le moyen de commande est muni d'un mécanisme de détection permettant de détecter la différence de charge entre la paire de chaînes sans fin, et commande le nombre de tours effectués par les moteurs d'entraînement de telle sorte que la différence de charge entre la paire de chaînes sans fin est éliminée dans les limites de la valeur prédéterminée donnée, lorsqu'une valeur dépassant la valeur prédéterminée est détectée par le mécanisme de détection.

8. Appareil transporteur de conteneurs à chaînes selon l'une quelconque des revendications 1 à 7, dans lequel les moteurs d'entraînement sont des servomoteurs.

9. Appareil transporteur de conteneurs à chaînes selon l'une quelconque des revendications 1 à 8, dans lequel le conteneur carré-cylindrique est un conteneur carré-cylindrique et muni d'un fond.

10. Appareil transporteur de conteneurs à chaînes selon l'une quelconque des revendications 1 à 9, dans lequel les roues dentées autour desquelles la chaîne sans fin est disposée sont maintenues au niveau de l'arbre d'entraînement et au niveau de l'arbre entraîné.

11. Procédé permettant de transporter un conteneur carré-cylindrique dans lequel le conteneur carré-cylindrique est transporté dans un état où le support de conteneur retient le conteneur carré-cylindrique qui a une section rhomboïde ou en parallélogramme, par les deux coins angulaires arrière en termes de la direction de circulation, au moyen d'une commande, en utilisant l'appareil transporteur de conteneurs à chaînes comprenant : une paire de chaînes sans fin simples ou multiples se faisant face parallèlement l'une à l'autre et tournant en rotation à la même vitesse ; des dents de chaîne autour desquelles sont disposées les chaînes sans fin ; un arbre d'entraînement et un arbre entraîné ou deux arbres d'entraînement retenant les dents de chaîne ; un support de conteneur fixé sur les chaînes sans fin mentionnées ci-dessus, incluant des pièces de retenue capables de retenir le conteneur carré-cylindrique ; au moins deux moteurs d'entraînement capables de provoquer la circulation et la rotation indépendantes de la paire de chaînes sans fin mentionnée ci-dessus, en entraînant les arbres d'entraînement mentionnés ci-dessus indépendamment ; et un moyen de commande capable de commander le moteur d'entraînement.

12. Procédé de transport du conteneur carré-cylindrique selon la revendication 11, dans lequel la commande dans le moyen de commande capable de transporter le conteneur carré-cylindrique dans un état où le support de conteneur retient le conteneur carré-cylindrique, qui a une section rhomboïde ou en parallélogramme par les deux coins angulaires arrière en termes de la direction de circulation, retarde le moment du départ du transport de la chaîne sans fin fixée par la pièce de retenue qui retient le coin latéral à angle aigu arrière en termes de la direction de circulation, par rapport à celle de la chaîne sans fin fixée par la pièce de retenue qui retient le coin latéral à angle obtus arrière en termes de la direction de circulation, et donc synchronise le moment de fin du transport.

13. Procédé de transport du conteneur carré-cylindrique selon la revendication 11, dans lequel la commande dans le moyen de commande capable de transporter le conteneur carré-cylindrique dans un état où le support de conteneur retient le conteneur cylindrique carré, qui a une section rhomboïde ou en parallélogramme, par les deux coins angulaires arrière en termes de la direction de circulation, ralentit le mouvement de transport de la chaîne sans fin fixée par la pièce de retenue qui retient le coin latéral à angle aigu arrière en termes de la direction de circulation, par rapport à la chaîne sans fin attachée par la pièce de retenue qui retient le coin latéral à angle obtus arrière en termes de la direction de circulation, et donc synchronise le moment du début et le moment de la fin du transport.

14. Procédé de transport du conteneur carré-cylindrique selon la revendication 11, dans lequel la commande dans le moyen de commande capable de transporter le conteneur carré-cylindrique dans un état où le support de conteneur retient le conteneur carré-cylindrique, qui a une section rhomboïde ou en parallélogramme, par les deux coins angulaires arrière en termes de la direction de circulation, retarde le moment de départ et le moment de la fin du transport de la chaîne sans fin fixée par la pièce de retenue qui retient le coin latéral à angle aigu arrière en termes de la direction de circulation, par rapport à ceux de la chaîne sans fin fixée par la pièce de support qui retient le coin latéral à angle obtus arrière en termes de la direction de circulation.

15. Procédé de transport du conteneur carré-cylindrique selon la revendication 11, dans lequel la commande dans le moyen de commande capable de transporter le conteneur carré-cylindrique dans un état où le support de conteneur supporte le conteneur carré-cylindrique qui a une section transversale rhomboïde ou en parallélogramme, par les deux coins angulaires arrière en termes de la direction de circulation, provoque le fait que la chaîne sans fin attachée avec une pièce de support qui supporte le coin latéral à angle obtus arrière en termes de la direction de circulation précède le mouvement de la chaîne sans fin fixée par la pièce de support qui supporte le coin latéral à angle aigu arrière en termes de la direction de circulation, pendant la période entre le moment du début et le moment de la fin du transport.

16. Procédé de transport du conteneur carré-cylindrique selon l'une quelconque des revendications 11 à 15, dans lequel le moyen de commande est capable de commander le nombre de tours effectués par les moteurs d'entraînement.

17. Procédé de transport du conteneur carré-cylindrique selon l'une quelconque des revendications 11 à 16, dans lequel le moyen de contrôle est muni d'un mécanisme de détection destiné à détecter la différence de charge entre la paire de chaînes sans fin, et commande le nombre de tours effectués par le moteur d'entraînement, de telle sorte que la différence de charge entre la paire de chaînes sans fin est éliminée dans les limites de la valeur prédéterminée donnée, lorsqu'une valeur supérieure à la valeur prédéterminée est détectée par le mécanisme de détection.

18. Procédé de transport du conteneur carré-cylindrique selon l'une quelconque des revendications 11 à 17, dans lequel les moteurs d'entraînement sont des servomoteurs.

19. Procédé de transport du conteneur carré-cylindrique selon l'une quelconque des revendications 11 à 18, dans lequel le conteneur carré-cylindrique est un conteneur carré cylindrique muni d'un fond.

20. Procédé de transport du conteneur carré-cylindrique selon l'une quelconque des revendications 11 à 19, dans lequel les roues dentées autour desquelles la chaîne sans fin est disposée sont maintenues au niveau de l'arbre d'entraînement et au niveau de l'arbre entraîné.
